# EUROPÄISCHE PATENTSCHRIFT

(11) **EP 1 018 243 B1**
(45) Veröffentlichungstag und Bekanntmachung des Hinweises auf die Patenterteilung: **23.04.2003**
(21) Anmeldenummer: 98955334.2
(22) Anmeldetag: 15.09.1998
(51) Int. Cl.: H04L 12/28, H04Q 7/20

(54) **VERFAHREN ZUM VERWALTEN VON PARTITIONIERTEN RESSOURCEN IN EINEM KOMMUNIKATIONSNETZ**
METHOD FOR MANAGING PARTITIONED RESOURCES IN A COMMUNICATIONS NETWORK
PROCEDE POUR LA GESTION DE RESSOURCES SEGMENTEES DANS UN RESEAU DE TELECOMMUNICATIONS

(30) Priorität: 24.09.1997 DE 19742123
(43) Veröffentlichungstag der Anmeldung: 12.07.2000
(73) Patentinhaber: SIEMENS AKTIENGESELLSCHAFT, 80333 München (DE)
(72) Erfinder: STEIN, Karl-Ulrich, D-82008 Unterhaching (DE)
(86) Internationale Anmeldenummer: DE9802735
(87) Internationale Veröffentlichungsnummer: WO99016211

(56) Entgegenhaltungen:
- EP-A- 0 755 164
- WO-A-96/27959
- WO-A-96/27975
- US-A- 5 638 371
- GERSHT A ET AL: "REAL-TIME BANDWIDTH ALLOCATION AND PATH RESTORATIONS IN SONET -BASED SELF-HEALING MESH NETWORKS" PROCEEDINGS OF THE INTERNATIONAL CONFERENCE ON COMMUNICATIONS (ICC), GENEVA, MAY 23 - 26, 1993, Bd. 1, 23. Mai 1993, Seiten 250-255, XP000371102 INSTITUTE OF ELECTRICAL AND ELECTRONICS ENGINEERS

## Beschreibung

Die zunehmende Nutzerakzeptanz sowie der technologische Fortschritt bei der Entwicklung neuer Breitbanddienste - auch als Multimedia-Dienste bezeichnet - führen zu einem zunehmenden Bedarf an breitbandigen Übertragungsressourcen in bereits bestehenden oder neu zu installierenden Kommunikationsnetzen. Um breitbandige Anwendungen, insbesondere hohe Datenübertragungsraten beanspruchende Multimedia-Dienste - z.B. Sprach-, Konferenz- und Daten-Dienste für die kommerzielle Nutzung sowie für den privaten oder freizeitorientierten Bereich "Video on demand", "Teleshopping", "Telebanking" oder interaktive Spiele - effektiv und wirtschaftlich zu realisieren, ist ein breitbandiges Kommunikationsnetzwerk, insbesondere ein hohe Übertragungsressourcen bereitstellendes Zubringernetzwerk - auch als ACCESS-Netzwerk oder "Local Loop" bezeichnet - erforderlich. In aktuell installierten Zubringernetzen werden die zur Verfügung stehenden Übertragungsressourcen auf die daran angeschlossenen Netzabschlußeinheiten bzw. auf die mit den Netzabschlußeinheiten verbundenen Kommunikationsendgeräte aufgeteilt, wobei das gemeinsam genutzte Übertragungsmedium durch einen Lichtwellenleiter oder durch zweiadrige Kupferleitungen oder Koaxkabel oder durch mehrere drahtlose Funkkanäle realisiert ist.

Bei drahtlosen Funk-Kommunikationsnetzen, insbesondere bei durch drahtlose Funkkanäle realisierten Zubringernetzen - auch als "Radio in the Local Loop" bzw. "RLL" bezeichnet - sind mehrere Netzabschlußeinheiten über Funkkanäle an eine zentral in einer Funkzelle angeordnete Basisstation - auch als "Radio Base Station" bezeichnet - angeschlossen. Im telcom report Nr. 18 (1995) Heft 1 "Drahtlos zum Freizeichen" Seite 36, 37 ist beispielsweise ein gemäß dem DECT-Standard ausgestaltetes drahtloses Zubringernetz für die drahtlose Sprach- und Datenkommunikation dargestellt. Das dargestellte Kommunikationssystem ist vorteilhaft in kurzer Zeit ohne Aufwand für die Verlegung von drahtgebundenen Anschlußleitungen realisierbar. Die dargestellten, den einzelnen Teilnehmern zugeordneten Netzabschlußeinheiten RNT sind über das Übertragungsmedium "Funkkanal" und die Basisstation RBS an ein übergeordnetes Kommunikationsnetz, beispielsweise an das ISDN-orientierte Festnetz, angeschlossen. Die drahtlosen Funkkanäle können beispielsweise mit Hilfe schmalbandiger Funk-Standards - z.B. DECT oder CDMA - realisiert sein, wobei insbesondere gemäß dem DECT-Standard ausgestaltete Zubringernetze für hohe Verkehrsaufkommen in zukünftigen Ballungszentren geeignet sind. Des Weiteren ist die DECT-Übertragungstechnologie einfach zu implementieren und bietet zusätzlich eine gute Sprachqualität sowie ISDN-Kompatibilität und die Möglichkeit der Datenübertragung. Bei Anschluß der gemäß schmalbandiger Funkstandards ausgestalteten Zubringernetze an ein ISDN-orientiertes Festnetz können die vorhandenen ISDN-B-Kanäle des Festnetzes mit jeweils einer Übertragungsrate von 64 Kbit/s genutzt werden. Bei aktuellen drahtlosen Zubringernetzen ist jedoch für eine über das drahtlose Übertragungsmedium "Funkkanal" aufgebaute Verbindung nur eine maximale Datenübertragungsrate von 64 Kbit/s vorgesehen. Für zukünftige Breitbandanwendungen, beispielsweise die Bereitstellung von Multimedia-Diensten, ist jedoch die Übertragungskapazität bzw. sind die Ressourcen der aktuellen drahtlosen Zubringernetze nicht ausreichend.

In WO 96/27975 ist ein als drahtloses GSM-Mobilfunknetz ausgestaltetes Kommunikationsnetz beschrieben, an das jeweils über einen Faxadapter zwei als Faxgeräte ausgestaltete Kommunikationsendgeräte angeschlossen sind. Bei einer von einem Faxgerät initiierten Anforderung von Übertragungstressourcen wird durch die Mobil-Vermittlungseinrichtung eine mobilfunkspezifische Abfrage im Visitor Location Register durchgeführt und die maximal erlaubte Datenübertragungsrate für das Ziel-Faxgerät ermittelt. Abhängig vom Ermittlungsergebnis wird eine einen oder mehrere GSM-Übertragungskanäle umfassende Verbindung bzw. Mehrkanalverbindung über das Mobilfunknetz aufgebaut, wobei die durch die GSM-Übertragungskanäle bereitgestellte Übertragungsrate signifikant höher ist als die ermittelte maximal erlaubte Datenübertragungsrate. Der signifikante Überschuß an bereitgestellter Übertragungsrate wird für eine effektive Anpassung der über die jeweiligen Übertragungskanäle eingesetzten Kanalcodierung verwendet.

Desweiteren ist in EP 0 755 164 A2 ein drahtloses ATM-Kommunikationsnetz beschrieben, bei dem mittels eines speziellen Zugriffsprotokolls - Medium Access Control (MAC) Protocol - basierend auf einem TDM/TDMA-Übertragungsverfahren bzw. Zugriffsverfahren eine Informationsübermittlung im Rahmen von ATM-spezifischen Serviceklassen - CBR, VBR, ABR - realisiert ist. Im Rahmen des MAC-Protokolls erfolgt die Zuteilung von Übertragungsressourcen, d.h. die Zuteilung von Zeitschlitzen bzw. Slots sowohl für verbindungslose als auch für verbindungsorientierte Datenströme. Von dezentralen Komponeten des Kommunikationsnetzes werden Ressourcen-Anforderungen im Rahmen einer Kontrollnachricht mittels eines "Uplink-Subframe" an eine Basisstation übermittelt. Erfolgreiche Ressourcen-Anforderungen werden durch die Basisstation im Rahmen eines Kontrollfeldes im darauffolgenden, in downstream-Richtung ausgesendeten Datenrahmen bestätigt, wobei gleichzeitig der Umfang der für die anfordernde Komponente zugeteilten Übertragungsressourcen übermittelt wird.

Der Erfindung liegt die Aufgabe zugrunde, gemäß schmalbandiger Funk-Standards - z.B. DECT oder CDMA - ausgestaltete drahtlose Kommunikationsnetze, insbesondere drahtlose Zubringernetze für die Nutzung bzw. für die Bereitstellung von breitbandigen, d.h. eine hohe Übertragungsrate beanspruchenden Diensten bzw. Anwendungen zu erweitern. Die Aufgabe wird durch ein Verfahren gemäß den Merkmalen des Patentanspruchs 1 gelöst.

Beim erfindungsgemäßen Verfahren zum Verwalten von partitionierten Ressourcen in einem Kommunikationsnetz erfolgt eine Ressourcen-Anforderung von zumindest einer Komponente des Kommunikationsnetzes an das Kommunikationsnetz. Der wesentliche Aspekt des erfindungsgemäßen Verfahrens besteht darin, daß zumindest ein Teil von freien Partitionen der Ressourcen ermittelt wird und daß vom Kommunikationsnetz die ermittelten freien Partitionen der Ressourcen der anfordernden Komponente im Sinne einer Auswahl aus den angebotenen Partitionen der Ressourcen für eine Informationsübermittlung angeboten werden.

Der wesentliche Vorteil des erfindungsgemäßen Verfahrens besteht darin, daß auf einfache Weise bereits realisierte, Kommunikationsnetz-spezifische Ressourcen für die Nutzung und Bereitstellung von breitbandigen Diensten, insbesondere Multimedia-Diensten genutzt werden. Die durch das Kommunikationsnetz bereitgestellten Ressourcen, insbesondere Übertragungsressourcen, sind dabei in einzelne Partitionen unterteilt. Bei einer Anforderung von Übertragungsressourcen - beispielsweise zur Nutzung eines breitbandigen Multimedia-Dienstes - werden alle freien, innerhalb des Kommunikationsnetzes verfügbaren Partitionen, ermittelt und der anfordernden Komponente zur Informationsübermittlung angeboten, und somit auch eine optimale Ausnutzung der bereitgestellten Übertragungsressourcen erreicht.

Vorteilhaft wird durch die anfordernde Komponente zumindest ein Teil der angebotenen Partitionen der Ressourcen ausgewählt und im Sinne einer Informationsübermittlung der anfordernden Komponente zugeteilt - Anspruch 2. Durch diese vorteilhafte Ausgestaltung werden nur diejenigen angebotenen Ressourcen ausgewählt und einer Komponente des Kommunikationsnetzes zugeteilt, die tatsächlich zur Übermittlung von Informationen erforderlich bzw. ausgewählt sind, wodurch eine Nutzung der Ressourcen optimiert ist. Die nicht benötigten Ressourcen bzw. Partitionen können im Sinne einer effektiven Nutzung des Kommunikationsnetzes anderen Komponenten zur Informationsübermittlung angeboten und zugeteilt werden.

Gemäß einer vorteilhaften Ausgestaltung werden die ermittelten freien Partitionen der Ressourcen eine vorgebbare Zeitspanne angeboten - Anspruch 3. Nach Ablauf der Zeitspanne ohne Auswahl von freien Partitionen der Ressourcen wird zumindest ein Teil oder keine der angebotenen freien Partitionen der Ressourcen zugeteilt. Durch diese vorteilhafte Ausgestaltung wird eine unnötige Zuteilung aller ermittelten freien Partitionen der Ressourcen zu einer Komponente des Kommunikationsnetzes ohne Auswahl verhindert und die Effektivität des Kommunikationsnetzes hinsichtlich der Bereitstellung von hohen Übertragungsraten verbessert.

Vorteilhaft werden während der Übermittlung der Informationen weitere freie Partitionen der Ressourcen ermittelt und die ermittelten, weiteren freien Partitionen der Ressourcen der Informationen übermittelnden Komponente für die Informationsübermittlung angeboten - Anspruch 6. Durch die Informationen übermittelnde Komponente wird zumindest ein Teil der angebotenen weiteren freien Partitionen der Ressourcen ausgewählt und dieser ausgewählte Teil der angebotenen weiteren freien Partitionen der Ressourcen im Sinne einer Informationsübermittlung mit einer höheren Übertragungsrate zugeteilt - Anspruch 7. Durch diese vorteilhafte Ausgestaltung werden während einer Übermittlung von Informationen weitere freie Partitionen der Ressourcen ermittelt und der Informationen übermittelnden Komponente zugeteilt. Diese Variante ist insbesondere bei Einsatzfällen vorteilhaft, bei denen mehr Ressourcen angefordert werden als verfügbar sind. Somit werden die Übertragungsqualitäten aktueller Verbindungen hinsichtlich einer Informationsübermittlung mit maximaler Datenübertragungsrate laufend optimiert.

Gemäß einer weiteren vorteilhaften Ausgestaltung werden bereits einer Komponente für die Informationsübermittlung zugeteilte, jedoch temporär nicht genutzte Partitionen der Ressourcen zumindest temporär anderen Komponenten im Sinne einer Informationsübermittlung angeboten - Anspruch 8. Durch diese vorteilhafte Ausgestaltung werden die durch das Kommunikationsnetz bereitgestellten Partitionen der Ressourcen am effektivsten genutzt.

Gemäß einer vorteilhaften Ausgestaltung repräsentieren die partitionierten Ressourcen partitionierte Funk-Ressourcen in einem Funk-Kommunikationsnetz - Anspruch 10. Durch diese vorteilhafte Ausgestaltung werden in drahtlosen Zubringernetzen durch den Einsatz üblicherweise bereits verfügbarer Funkeinheiten gemäß standardisierter, schmalbandiger, drahtloser Übertragungsverfahren - insbesondere gemäß dem DECT- oder CDMA-Standard - auf einfache Weise bereits realisierte, Funk-spezifische Ressourcen und Basisstationen und deren Anschluß an das Festnetz für die Nutzung und Bereitstellung von breitbandigen Diensten, insbesondere Multimedia-Diensten genutzt.

Vorteilhaft sind die partitionierten Funk-Ressourcen durch drahtlose Funkkanäle innerhalb von Funk-Übertragungsstrecken im Funk-Kommunikationsnetz realisiert - Anspruch 11 - wobei die drahtlosen Funkkanäle gemäß dem DECT- oder CDMA-Standard oder auf einem weiteren TDMA- und/oder FDMA-Zugriffsverfahren basierendes Übertragungsverfahren ausgestaltet sind - Anspruch 12. Durch diese vorteilhafte Ausgestaltung sind bereits realisierte, standardisierte, digitale Übertragungsverfahren zur Informationsübermittlung nutzbar. Beispielsweise können bereits installierte digitale Kommunikationsstrukturen, d.h. Kommunikationssysteme - beispielsweise DECT- oder CDMA-Basisstationen und deren Anschluß an das Festnetz, insbesondere an das ISDN-orientierte Festnetz - genutzt werden.

Vorteilhaft wird die Übertragungsqualität der einzelnen Funkkanäle jeweils erfaßt und bewertet. In Abhängigkeit vom Bewertungsergebnis werden die einzelnen Funkkanäle für eine Informationsübermittlung angeboten und zugeteilt oder bleiben den bereits für eine Informationsübermittlung genutzten Funkkanälen zugeteilt. Dabei werden bereits für eine Informationsübermittlung zugeteilte, genutzte Funkkanäle mit einer als unzureichend bewerteten Übertragungsqualität nicht weiter zugeteilt bzw. werden nicht weiter genutzt und freie Funkkanäle mit einer als gut bewerteten Übertragungsqualität für die Informationsübermittlung angeboten - Anspruch 14. Durch diese vorteilhafte Ausgestaltung werden die für eine Informationsübermittlung einer Verbindung genutzten Funkkanäle hinsichtlich ihrer Übertragungsqualität überprüft und bewertet und somit nur solche Funkkanäle mit einer gut bewerteten Übertragungsqualität für die Informationsübermittlung genutzt. Funkkanäle mit einer nicht ausreichenden Übertragungsqualität werden vorübergehend bzw. temporär nicht für die Informationsübermittlung genutzt. Sobald die Übertragungsqualität dieser Funkkanäle wieder als gut bewertet wird, werden diese der ursprünglichen Verbindung zur Informationsübermittlung wieder zugeteilt. Durch diese Ausgestaltung werden durch eine geringe Übertragungsqualität aufweisende Funkkanäle verursachte Bitfehler während der Informationsübermittlung minimiert.

Weitere vorteilhafte Ausgestaltungen des erfindungsgemäßen Verfahrens sind den weiteren Ansprüchen zu entnehmen.

Im folgenden wird das erfindungsgemäße Verfahren anhand eines Blockschaltbildes näher erläutert.

Das Blockschaltbild zeigt ein beispielsweise gemäß dem DECT-Standard konzipiertes Funk-Kommunikationsnetz über das mehrere, Teilnehmeranschlußeinrichtungen repräsentierende, dezentrale Kommunikationsendeinrichtungen DKE1...3 an ein übergeordnetes, ISDN-orientiertes Kommunikationsnetz IKN angeschlossen sind. Eine gemäß dem DECT-Standard ausgestaltete und das Zentrum einer Funkzelle bzw. eines Funkbereiches FB darstellende Basisstation RBS ist jeweils über das Übertragungsmedium "DECT-Funkkanal" mit einer drahtlosen, dezentralen Netzabschlußeinheit RNT1...3 verbunden. Die einzelnen dezentralen Netzabschlußeinheiten RNT1...3 weisen jeweils Funk-Verbindung zur Basisstation RBS auf und sind jeweils über eine Verbindungsleitung mit der dezentralen Kommunikationsendeinrichtung DKE1...3 verbunden. Eine dezentrale Kommunikationsendeinrichtung DKE1...3 kann beispielsweise durch ein Multimedia-Kommunikationsendgerät oder ein ISDN-orientiertes Fernsprechendgerät realisiert sein. Die Basisstation RBS ist über eine Verbindungsleitung mit einer Basisstation-Kontrolleinrichtung RBC verbunden. Die Basisstation-Kontrolleinrichtung RBC ist über eine Kupferleitung oder einen Lichtwellenleiter oder ein Richtfunk-Zubringersystem - im Blockschaltbild durch VL angedeutet - mit einer Netzkontrolleinheit RDU verbunden, in der unter anderem die Sprachumcodierung und die Verwaltung der Ressourcen der Funkbereiche FB und der Ressourcen in Richtung übergeordnetes, ISDN-orientiertes Kommunikationsnetz IKN stattfindet. Die Funk-Ressourcen des jeweiligen Funkbereiches FB können alternativ auch in der Basisstation RBS oder in der Basisstation-Kontrolleinrichtung RBC verwaltet bzw. angeboten und zugeteilt werden. Über eine standardisierte V5.1-Schnittstelle ist die Netzkontrolleinheit RDU beispielsweise über einen Lichtwellenleiter LWL an das Festnetz bzw. übergeordnete, ISDN-orientierte Kommunikationsnetz IKN angeschlossen.

Jede drahtlose Netzabschlußeinheit RNT1...3 weist eine gemäß dem DECT-Standard ausgestaltete DECT-Luftschnittstelle auf. Über diese wird durch eine Kombination von FDMA- und TDMA-Zugriffsverfahren auf das drahtlose Übertragungsmedium "DECT-Funkkanal" zugegriffen. Dabei stehen im Frequenzbereich zwischen 1880 MHz und 1900 MHz 10 Trägerfrequenzen mit einem Kanalabstand von jeweils 1,728 MHz zur Verfügung (FDMA), wobei der pro Träger festgelegte Zeitrahmen in 24 Zeitschlitze bzw. Kanäle - auch als "Slots" bezeichnet - eingeteilt ist (TDMA). Ein in 24 Zeitschlitze unterteilter Zeitrahmen - auch als Frame bezeichnet - wiederholt sich periodisch alle 10 ms. Innerhalb eines Zeitrahmens werden die für eine bidirektionale Informationsübermittlung notwendigen Hin- und Rückkanäle durch das "Time Division Duplex"-Verfahren (TDD) realisiert.

Durch den Duplexbetrieb werden die ersten 12 Zeitschlitze eines Rahmens zum Senden von Informationen von der Basisstation RBS an die einzelnen dezentralen Netzabschlußeinheiten RNT1...3 und die restlichen 12 Zeitschlitze zum Senden von Informationen von den drahtlosen Netzabschlußeinheiten RNT1...3 zur Basisstation RBS verwendet. Auf einer Trägerfrequenz sind beispielsweise 12 Duplexkanäle realisierbar. Insgesamt werden durch das im Blockschaltbild dargestellte Funk-Kommunikationsnetz bzw. drahtlose Zubringernetz ACCESS jeweils 12 Duplexkanäle auf jeder der 10 Trägerfrequenzen und somit 120 Duplexkanäle bereitgestellt. Jede der 10 Trägerfrequenzen der gemäß dem DECT-Standard ausgestalteten Luftschnittstelle weist eine Datenübertragungsrate von 1152 Kbit/s auf. Gemäß alternativer Ausgestaltungsvarianten der Luftschnittstelle gemäß dem DECT-Standard kann die durch eine Trägerfrequenz bereitgestellte Datenübertragungsrate auf einzelne Kanäle mit einer alternativen Übertragungsrate aufgeteilt werden - z.B. auf 6 Kanäle mit 80 Kbit/s oder 60 Kanäle mit 8 Kbit/s.

Im Folgenden wird die erfindungsgemäße Verteilung bzw. Zuordnung der durch das drahtlose gemäß dem DECT-Standard ausgestaltete Zubringernetz ACCESS bereitgestellten Ressourcen bzw. Übertragungskanäle auf die einzelnen dezentralen Netzabschlußeinheiten RNT1...3 bzw. Kommunikationsendeinrichtungen DKE1...3 näher erläutert.

Gemäß dem dargestellten Ausführungsbeispiel stellt die erste Kommunikationsendeinrichtung DKE1 ein Multimedia-Kommunikationsendgerät dar, in welcher beispielsweise ein Bildverarbeitungsprozeß aktiv ist. Ausgehend von diesem Multimedia-Kommunikationsendgerät DKE1 soll ein Video-Informationen enthaltener Datenstrom über das drahtlose Zubringernetz ACCESS an ein Ziel im übergeordneten, ISDN-orientierten Kommunikationsnetz IKN übermittelt werden. Dazu wird von der ersten drahtlosen Netzabschlußeinheit RNT1 eine Aufforderung zum Verbindungsaufbau über das Übertragungsmedium "DECT-Funkkanal" an die Basisstation RBS übermittelt. Ausgehend von der empfangenen Verbindungsaufbau-Aufforderung werden durch die Basisstation RBS alle freien Partitionen der Funk-Ressourcen, d.h. alle freien DECT-Punkkanäle im Funkbereich FB ermittelt und der ersten drahtlosen Netzabschlußeinheit RNT1 bzw. dem Multimedia-Kommunikationsendgerät DKE1 zur Übermittlung der Video-Informationen angeboten. Von den angebotenen freien Funkkanälen werden beispielsweise vier Funkkanäle bzw. Übertragungskanäle mit jeweils einer Datenübertragungsrate von 32 Kbit/s durch die erste drahtlose Netzabschlußeinheit RNT1 ausgewählt und die ausgewählten Funkkanäle anschließend durch die Basisstation RBS dieser ersten Netzabschlußeinheit RMT1 zugeteilt. Die Auswahl von angebotenen freien Funkkanälen kann alternativ auch durch den Teilnehmer - über die dezentrale Kommunikationsendeinrichtung DKE1...3 - gesteuert erfolgen. Nach der Zuteilung der vier Übertragungskanäle werden die Video-Informationen von der ersten Kommunikationsendeinrichtung DKE1 über die erste dezentrale Netzabschlußeinheit RNT1 und über die 4 zugeteilten Übertragungskanäle mit einer Gesamt-Datenübertragungsrate von 128 Kbit/s an die Basisstation RBS übertragen. Von der Basisstation RBS werden die empfangenen Video-Informationen über die Basisstation-Kontrolleinheit RBC an die Netzkontrolleinheit RDU übermittelt. In der Netzkontrolleinheit RDU wird der empfangene und eine Übertragungsrate von 128 Kbit/s aufweisende Video-Datenstrom ISDN-konform umgewandelt, d.h. in zwei ISDN-Basiskanäle mit jeweils einer Übertragungsrate von 64 Kbit/s eingefügt und die so an das ISDN-Übertraungsverfahren angepaßten Video-Informationen an das im übergeordneten Kommunikationsnetz IKN bzw. Festnetz angeordnete Ziel weitervermittelt.

Während der Übertragung der Video-Informationen von der ersten dezentralen Netzabschlußeinheit RNT1 über das Übertragungsmedium "DECT-Funkkanal" an die Basisstation RBS können erfindungsgemäß durch die Basisstation RBS laufend weitere freie bzw. frei werdende Ressourcen bzw. freie DECT-Übertragungskanäle ermittelt und die ermittelten freien DECT-Übertragungskanäle der ersten drahtlosen Netzabschlußeinheit RNT1 zur Erhöhung der Übertragungskapazität angeboten werden. Die erste Netzabschlußeinheit RNT1 kann beispielsweise zwei der angebotenen freien DECT-Übertragungskanäle auswählen und somit über insgesamt 6 DECT-Übertragungskanäle Video-Informationen an die Basisstation RBS übermitteln, wodurch bei einer Festbild-Übertragung die Übertragungszeit verkürzt oder bei einer Bewegtbild-Übertragung die Bildqualität verbessert und somit die zur Verfügung stehenden Ressourcen optimal genutzt werden. Das Auswählen von angebotenen freien Ressourcen durch eine Netzabschlußeinheit RNT1...3 kann sowohl automatisiert als auch durch den Teilnehmer - über die dezentrale Kommunikationsendeinrichtung DKE1...3 - gesteuert erfolgen.

Gemäß einer Ausgestaltungsvariante werden bei einer Aufforderung zum Verbindungsaufbau durch eine der drahtlosen Netzabschlußeinheiten RNT1...3 die durch die Basisstation RBS ermittelten freien Übertragungskanäle nur über eine vorgebbare Zeitspanne - beispielsweise 3 s - der jeweiligen Netzabschlußeinheit RNT1...3 angeboten, d.h. für diese reserviert. Innerhalb dieser Zeitspanne können die für die Informationsübermittlung erforderlichen Übertragungskanäle durch die jeweilige Netzabschlußeinheit RNT1...3 ausgewählt werden. Bei Ablauf der vorgegebenen Zeitspanne ohne Auswahl von Funkkanälen wird per Vorgabe - d.h. definierbarer Default-Wert - eine vorgegebene Anzahl von Übertragungskanälen - beispielsweise zwei DECT-Funkkanäle- der jeweiligen Netzabschlußeinheit RNT1...3 zugeordnet. Die Anzahl der zuordenbaren Übertragungskanäle nach Ablauf der vorgegebenen Zeitspanne bzw. der Default-Wert kann auch aus der Historie der zuletzt aufgebauten Verbindungen einer drahtlosen Netzabschlußeinheit RNT1...3 bestimmt werden. Bei z.B. Ressourcen-Mangel können alternativ auch keine Ressourcen per Vorgabe zugeteilt werden. Lediglich die Möglichkeit der Signalisierung muß für alle angeschlossenen Kommunikationsendeinrichtungen DKE1...3 ständig gewährleistet werden.

Während einer aktiven Datenübertragung bzw. Informationsübermittlung zwischen einer drahtlosen Netzabschlußeinheit RNT1 und der Basisstation RBS über einen oder mehrere Übertragungskanäle wird die Übertragungsqualität der einzelnen für die Datenübertragung genutzten Übertragungskanäle laufend überprüft. Wird die Verringerung der Übertragungsqualität von einem oder mehreren zugeteilten Übertragungskanälen festgestellt, so wird die Datenübertragung über diese Übertragungskanäle beendet und die noch zu übermittelnden Informationen nur noch über die Übertragungskanäle mit einer ermittelten guten Übertragungsqualität übermittelt. Durch die Überprüfung der Übertragungsqualität der einzelnen Kanäle kann die Bit-Fehlerrate der zu übertragenden Video-Informationen reduziert werden.

Alternativ kann bei Feststellen einer Verringerung der Übertragungsqualität einzelner Übertragungskanäle die Datenübertragung auf andere, noch freie Übertragungskanäle mit einer als gut bewerteten Übertragungsqualität umgeschaltet werden. Ebenso können nicht mehr zugeteilte Übertragungskanäle mit einer gering bewerteten Übertragungsqualität wieder einer Verbindung zugeordnet werden, nachdem sie wieder eine als gut bewertete Übertragungsqualität aufweisen. Vorteilhaft wird das Anbieten von zusätzlichen Übertragungskanälen d.h. die Erhöhung der Übertragungsrate bzw. die Reduzierung der Übertragungsrate aufgrund Deaktivierung von Übertragungskanälen mit einer gering bewerteten Übertragungsqualität in einer Anzeige in der jeweiligen dezentralen Kommunikationsendeinrichtung DKE1...3 angezeigt. Somit kann ein die jeweilige dezentrale Kommunikationsendeinrichtung DKE1....3 bedienender Teilnehmer die Anforderung bzw. die Zuteilung bzw. die Deaktivierung von einzelnen Übertragungskanälen bzw. Ressourcen steuern.

Gemäß einer weiteren Ausgestaltungsvariante stellt eine der dezentralen Kommunikationsendeinrichtungen DKE1...3 einen Personalcomputer dar, in welchem ein Prozeß zum Senden und Empfangen von verbindungslosem Verkehr aktiv ist. Ein derartiger verbindungsloser Verkehr kann beispielsweise bei Übermittlung von paketorientierten Informationen über ein globales Netzwerk, beispielsweise über den als "Internet" bezeichneten Zusammenschluß weltweit angeordneter Datennetze, auftreten. Der im "Internet" auftretende, durch Internet-Protokolle - z.B. TCP/IP - gesteuerte, verbindungslose Datenverkehr, insbesondere der durch den als "World-Wide-Web" bezeichneten Internet-Dienst verursachte Datenverkehr ist durch ausgeprägtes, burstartiges Senden und Empfangen von Datenpaketen charakterisiert. Bei Nutzung des "World-Wide-Web" - auch als "Surfen im Internet" bezeichnet - tritt gleichzeitig ein starkes Ungleichgewicht bei dem zu übermittelnden Datenvolumen, d.h. bei der Anzahl der zu übermittelnden Datenpakete in Sendeund Empfangsrichtung auf. So ist beispielsweise in der ersten einen Personalcomputer realisierenden dezentralen Kommunikationsendeinrichtung DKE1 ein Prozeß zum Senden, Empfangen und zum Anzeigen von World-Wide-Web-Informationen aktiv - auch als Browser-Software bezeichnet. Der Personalcomputer ist über die erste dezentrale drahtlose Netzabschlußeinheit RNT1 und über 2 DECT-Übertragungskanäle mit der Basisstation RBS und über diese mit dem übergeordneten Netz IKN bzw. "Internet" verbunden. Üblicherweise werden bei normaler Nutzung des "Browsers" durch den Teilnehmer eine geringe Anzahl weitere World-Wide-Web-Informationen - z.B. Video-Informationen im MPEG-Format - anfordernde Datenpakete in Richtung übergeordnetes Netz IKN übermittelt.

Als Antwort auf eine solche Informationsanforderung werden beispielsweise von einem im übergeordneten Kommunikationsnetz IKN angeordnetem Videoserver - nicht dargestellt - die angeforderten, ein hohes Datenvolumen aufweisenden Video-Informationen, d.h. eine große Anzahl von Datenpaketen an die Basisstation RBS und über die beiden DECT-Übertragungskanäle an die erste drahtlose Netzabschlußeinheit RNT1 und weiter an den Personalcomputer DKE1 übermittelt. Aufgrund der burstartigen Charakteristik des verbindungslosen Verkehrs in Abhängigkeit von der Übertragsrichtung - insbesondere bei TCP/IP-Verbindungen- werden die zugeordneten Übertragungsressourcen einer aufgebauten Verbindung, insbesondere die einer logischen TCP/IP-Verbindung zugeordneten Ressourcen, ungenügend genutzt, d.h. die zugeteilten DECT-Übertragungskanäle sind temporär ungenutzt. Gemäß einer vorteilhaften Ausgestaltung des erfindungsgemäßen Verfahrens werden zugeteilte, ungenutzte Ressourcen - z.B. temporär keinen Datenverkehr aufweisende DECT-Funkkanäle einer TCP/IP-Verbindung - anderen Ressourcen bzw. Übertragungskanäle anfordernden Netzabschlußeinheiten RNT1...3, welche im Funkbereich FB der Basisstation RBS angeordnet sind, angeboten und diesen zugeteilt. Bei Bedarf, d.h. bei hohem Verkehrsaufkommen in der TCP/IP-Verbindung, werden die temporär anderen Netzabschlußeinheiten RNT1...3 zur Verfügung gestellten Übertragungskanäle wieder der ursprünglichen TCP/IP-Verbindung zugeordnet.

Gemäß einer weiteren Ausgestaltungsvariante ist einer oder sind mehrere der zur Verfügung stehenden Funk-Übertragungskanäle als Signalisierungskanal zur Übermittlung von Signalisierungsinformationen zwischen Basisstation RBS und den drahtlosen Netzabschlußeinheiten nutzbar. Dieser weist beispielsweise eine Übertragungsrate von 8 KBit/s auf und ist gemäß der ISDN-Signalisierungsprozedur - beispielsweise dem D-Kanal-Protokoll - realisiert.

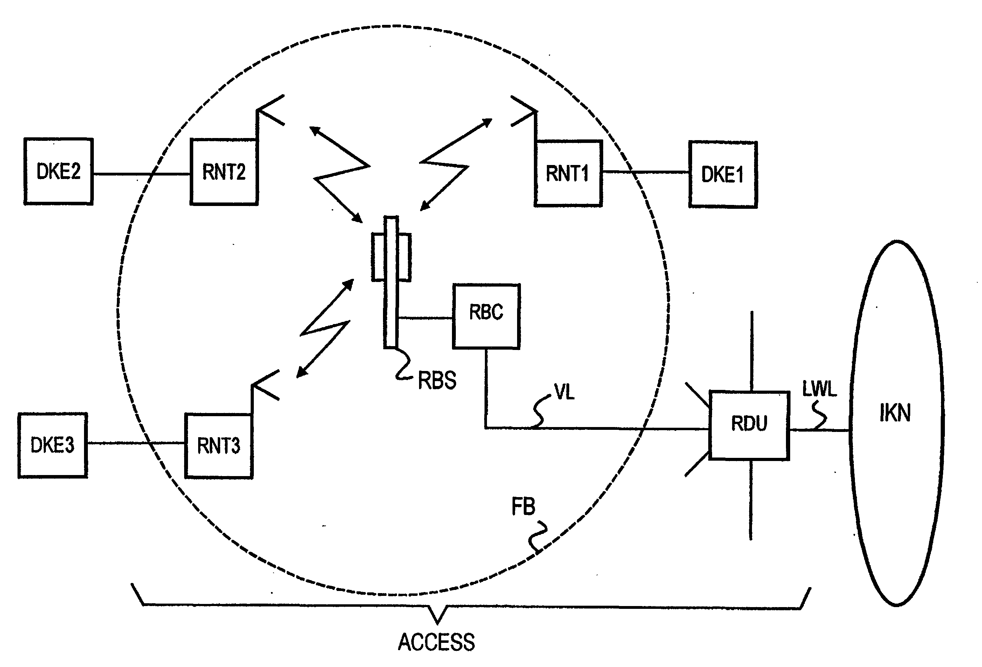

## Patentansprüche

1. Verfahren zum Verwalten von partitionierten Ressourcen in einem Kommunikationsnetz (ACCESS),
bei dem eine Ressourcen-Anforderung von zumindest einer Komponente (DKE1...3) des Kommunikationsnetzes (ACCESS) an das Kommunikationsnetz (ACCESS) erfolgt, und
bei dem zumindest ein Teil von freien Partitionen der Ressourcen ermittelt wird,
**dadurch gekennzeichnet,**
**daß** vom Kommunikationsnetz (ACCESS) die ermittelten freien Partitionen der Ressourcen der anfordernden Komponente (DKE1...3) im Sinne einer Auswahl aus den angebotenten Partitionen der Ressourcen für eine Informationsübermittlung angeboten werden.

2. Verfahren nach Anspruch 1,
**dadurch gekennzeichnet,**
- **daß** durch die anfordernde Komponente (DKE1...3) zumindest ein Teil der angebotenen Partitionen der Ressourcen ausgewählt wird, und
- **daß** der ausgewählte Teil der Partitionen der Ressourcen im Sinne einer Informationsübermittlung der anfordernden Komponente (DKE1...3) zugeteilt wird.

3. Verfahren nach Anspruch 1 oder 2,
**dadurch gekennzeichnet,**
**daß** die ermittelten freien Partitionen der Ressourcen eine vorgebbare Zeitspanne angeboten werden.

4. Verfahren nach Anspruch 3,
**dadurch gekennzeichnet,**
**daß** nach Ablauf der Zeitspanne ohne Auswahl von freien Partitionen der Ressourcen zumindest ein Teil der angebotenen freien Partitionen der Ressourcen der anfordernden Komponente (DKE1...3) zugeteilt wird.

5. Verfahren nach Anspruch 4,
**dadurch gekennzeichnet,**
**daß** die zugeteilten freien Partitionen der Ressourcen
- die angeforderten Ressourcen, oder
- die durch die anfordernde Komponente (DKE1...3) ausgewählten Ressourcen, oder
- eine voreingestellte Anzahl der angebotenen, freien Partitionen der Ressourcen, oder
- alle angebotenen freien Partitionen der Ressourcen, oder
- keine Partition der Ressourcen repräsentieren.

6. Verfahren nach einem der Ansprüche 2 bis 5,
**dadurch gekennzeichnet,**
**daß** während der Übermittlung der Informationen weitere freie Partitionen der Ressourcen ermittelt werden und die ermittelten weiteren freien Partitionen der Ressourcen der Informationen übermittelnden Komponente (DKE1...3) für die Informationsübermittlung angeboten werden.

7. Verfahren nach Anspruch 6,
**dadurch gekennzeichnet,**
- **daß** durch die Informationen übermittelnde Komponente (DKE1...3) zumindest ein Teil der angebotenen, weiteren freien Partitionen der Ressourcen ausgewählt wird, und
- **daß** der ausgewählte Teil der angebotenen, weiteren freien Partitionen der Ressourcen im Sinne einer Informationsübermittlung mit einer höheren Übertragungsrate zugeteilt wird.

8. Verfahren nach einem der Ansprüche 2 bis 7,
**dadurch gekennzeichnet,**
**daß** bereits einer Komponente (DKE1...3) für die Informationsübermittlung zugeteilte, jedoch temporär nicht genutzte Partitionen der Ressourcen zumindest temporär anderen Komponenten (DKE1...3) im Sinne einer Informationsübermittlung angeboten werden.

9. Verfahren nach einem der Ansprüche 1 bis 8,
**dadurch gekennzeichnet,**
**daß** über zumindest eine Partition der Ressourcen Signalisierungsinformationen übermittelt werden.

10. Verfahren nach einem der Ansprüche 1 bis 9,
**dadurch gekennzeichnet,**
**daß** die partitionierten Ressourcen partitionierte Funk-Ressourcen in einem Funk-Kommunikationsnetz repräsentieren.

11. Verfahren nach Anspruch 10,
**dadurch gekennzeichnet,**
**daß** die partitionierten Funk-Ressourcen mit Hilfe drahtloser Funkkanäle innerhalb von Funk-Übertragungsstrecken im Funk-Kommunikationsnetz (ACCESS) bereitgestellt werden.

12. Verfahren nach Anspruch 11,
**dadurch gekennzeichnet,**
**daß** die drahtlosen Funkkanäle gemäß dem DECT- oder CDMA-Standard oder gemäß einem weiteren auf einem TDMA- und/oder FDMA-Zugriffsverfahren basierenden Übertragungsverfahren ausgestaltet sind.

13. Verfahren nach Anspruch 11 oder 12,
**dadurch gekennzeichnet,**
**daß** über die drahtlosen Funkkanäle jeweils Informationen mit einer Übertragungsrate von 80 Kbit/s oder 32 Kbit/s oder 8 Kbit/s übermittelt werden.

14. Verfahren nach einem der Ansprüche 11 bis 13,
**dadurch gekennzeichnet,**
- **daß** die Übertragungsqualität der einzelnen Funkkanäle jeweils erfaßt und bewertet wird, und
- **daß** die einzelnen Funkkanäle in Abhängigkeit vom Bewertungsergebnis für eine Informationsübermittlung angeboten und zugeteilt werden oder bereits für eine Informationsübermittlung genutzte Funkkanäle zugeteilt bleiben, wobei
-- bereits für eine Informationsübermittlung zugeteilte, genutzte Funkkanäle mit einer als schlecht bewerteten Übertragungsqualität nicht weiter zugeteilt bleiben bzw. genutzt werden, und
-- freie Funkkanäle mit einer als gut bewerteten Übertragungsqualität für die Informationsübermittlung angeboten werden.

15. Verfahren nach einem der Ansprüche 11 bis 14,
**dadurch gekennzeichnet,**
**daß** einer der drahtlosen Funkkanäle als Signalisierungskanal genutzt wird.

## Claims

1. Method for managing partitioned resources in a communications network (ACCESS),
in which a resource request is made to the communications network (ACCESS) by at least one component (DKE1...3) in the communications network (ACCESS), and
in which at least one portion of free partitions of the resources is ascertained,
**characterized**
**in that** the communications network (ACCESS) offers the ascertained free partitions of the resources to the requesting component (DKE1...3) for the purpose of selection from the offered partitions of the resources for information transmission.

2. Method according to Claim 1,
**characterized**
- **in that** the requesting component (DKE1...3) selects at least one portion of the offered partitions of the resources, and
- **in that** the selected portion of the partitions of the resources is allocated to the requesting component (DKE1...3) for the purpose of information transmission.

3. Method according to Claim 1 or 2,
**characterized**
**in that** the ascertained free partitions of the resources are offered for a prescribable period of time.

4. Method according to Claim 3,
**characterized**
**in that**, after the period of time has expired with no selection of free partitions of the resources, at least one portion of the offered free partitions of the resources is allocated to the requesting component (DKE1...3).

5. Method according to Claim 4,
**characterized**
**in that** the allocated free partitions of the resources
- represent the requested resources, or
- the resources selected by the requesting component (DKE1...3). or
- a preset number of the offered, free partitions of the resources, or
- all the offered free partitions of the resources, or
- no partition of the resources.

6. Method according to one of Claims 2 to 5,
**characterized**
**in that**, during transmission of the information, further free partitions of the resources are ascertained and the ascertained further free partitions of the resources are offered to the component (DKE1...3) transmitting information for the purpose of information transmission.

7. Method according to Claim 6,
**characterized**
- **in that** the component (DKE1...3) transmitting information selects at least one portion of the offered, further free partitions of the resources, and
- **in that** the selected portion of the offered, further free partitions of the resources is allocated for the purpose of information transmission at a higher transfer rate.

8. Method according to one of Claims 2 to 7,
**characterized**
**in that** resource partitions which have already been allocated to a component (DKE1...3) for information transmission but are temporarily unused are offered at least temporarily to other components (DKE1...3) to the purpose of information transmission.

9. Method according to one of Claims 1 to 8,
**characterized**
**in that** at least one partition of the resources is used to transmit signalling information.

10. Method according to one of Claims 1 to 9,
**characterized**
**in that** the partitioned resources represent partitioned radio resources in a radio communications network.

11. Method according to Claim 10,
**characterized**
**in that** the partitioned radio resources are provided using wireless radio channels within radio transmission links within the communications network (ACCESS).

12. Method according to Claim 11,
**characterized**
**in that** the wireless radio channels are designed in line with the DECT or CDMA standard or in line with another transmission method based on a TDMA and/or FDMA access method.

13. Method according to Claim 11 or 12,
**characterized**
**in that** the wireless radio channels are respectively used to transmit information at a transfer rate of 80 kbit/s or 32 kbit/s or 8 kbit/s.

14. Method according to one of Claims 11 to 13,
**characterized**
- **in that** the transmission quality of the individual radio channels is respectively detected and assessed, and
- **in that** the individual radio channels are offered and allocated for information transmission on the basis of the assessment result, or radio channels already used for information transmission remain allocated, where
-- radio channels used, which have already been allocated for information transmission, whose transmission quality is assessed as poor do not continue to remain allocated or to be used, and
-- available radio channels whose transmission quality is assessed as good are offered for information transmission.

15. Method according to one of Claims 11 to 14,
**characterized**
**in that** one of the wireless radio channels is used as a signalling channel.

## Revendications

1. Procédé destiné à la gestion de ressources segmentées dans un réseau de communication (ACCESS),
dans lequel au moins une composante (DKE1...3) du réseau de communication (ACCESS) effectue une demande de ressources au réseau de communication (ACCESS) et
dans lequel on recherche au moins une partie de segments libres de ressources
**caractérisé par le fait**
**que** le réseau de communication (ACCESS) offre les segments libres de ressources, qui ont été trouvés, à la composante demandante (DKE1...3), pour qu'elle fasse, en vue d'une transmission d'informations, un choix parmi les segments de ressources offerts.

2. Procédé selon la revendication 1
**caractérisé par le fait**
- **que** la composante demandante (DKE1...3) choisit au moins une partie des segments de ressources offerts et
- **que** la partie choisie des segments de ressources est allouée à la composante demandante (DKE1...3) en vue d'une transmission d'informations.

3. Procédé selon la revendication 1 ou 2
**caractérisé par le fait**
**que** les segments de ressources libres, qui ont été trouvés, sont offerts pendant une période de temps, qui peut être prédéterminée.

4. Procédé selon la revendication 3
**caractérisé par le fait**
**que**, après l'écoulement de la période de temps sans que les segments de ressources libres n'aient été choisis, au moins une partie des segments de ressources libres qui ont été offerts, est affectée à la composante demandante (DKE1...3).

5. Procédé selon la revendication 4
**caractérisé par le fait**
**que** les segments de ressources libres qui ont été affectés, représentent
- les ressources demandées ou
- les ressources choisies par la composante demandante (DKE1...3) ou
- un nombre préréglé de segments de ressources libres qui ont été offerts ou
- tous les segments de ressources libres qui ont été offerts, ou
- aucun segment de ressource.

6. Procédé selon l'une des revendications 2 à 5
**caractérisé par le fait**
**que**, pendant la transmission des informations, d'autres segments de ressources libres sont recherchés et les autres segments de ressources libres qui ont été trouvés, sont offerts, en vue de la transmission d'informations, à la composante (DKE1...3) qui transmet des informations.

7. Procédé selon la revendication 6
**caractérisé par le fait**
- **que** la composante (DKE1...3) qui transmet des informations, choisit au moins une partie des autres segments de ressources libres qui sont offerts, et
- **que** la partie choisie des autres segments de ressources libres qui sont offerts, est allouée en vue d'une transmission d'informations avec un débit de transmission plus élevé.

8. Procédé selon l'une des revendications 2 à 7
**caractérisé par le fait**
**que** des segments de ressources, qui ont déjà été affectés à une composante (DKE1...3) pour la transmission d'informations, mais qui, temporairement, ne sont pas utilisés, sont offerts, au moins temporairement, à d'autres composantes (DKE1...3) en vue d'une transmission d'informations.

9. Procédé selon l'une des revendications 1 à 8
**caractérisé par le fait**
**que** des informations de signalisation sont transmises par l'intermédiaire de au moins un segment de ressources.

10. Procédé selon l'une des revendications 1 à 9
**caractérisé par le fait**
**que** les ressources segmentées représentent des ressources radio segmentées dans un réseau de communication radio.

11. Procédé selon la revendication 10
**caractérisé par le fait**
**que** les ressources radio segmentées sont mises à disposition à l'aide de canaux radio faisant partie de lignes de transmission radio dans le réseau de communication radio (ACCESS).

12. Procédé selon la revendication 11
**caractérisé par le fait**
**que** les canaux radio sont conçus conformément à la norme DECT ou CDMA ou conformément à un autre procédé de transmission reposant sur un procédé d'accès TDMA et/ou FDMA.

13. Procédé selon la revendication 11 ou 12
**caractérisé par le fait**
**que**, par l'intermédiaire de chaque canal radio, des informations sont transmises avec un débit de transmission de 80 Kbit/s ou 32 Kbit/s ou 8 Kbit/s.

14. Procédé selon l'une des revendications 11 à 13
**caractérisé par le fait**
- **que** la qualité de transmission de chaque canal radio est détectée et évaluée et
- **que** les différents canaux radio sont offerts et affectés, en fonction du résultat de l'évaluation, pour une transmission d'informations ou que des canaux radio déjà utilisés pour une transmission d'informations restent alloués,
- - des canaux radio déjà utilisés et alloués pour une transmission d'informations et qui ont une qualité de transmission considérée comme mauvaise, ne restant pas utilisés ou alloués et
- - des canaux radio libres, qui ont une qualité de transmission considérée comme bonne, étant offerts pour la transmission d'informations.

15. Procédé selon l'une des revendications 11 à 14
**caractérisé par le fait**
**que** l'un des canaux radio est utilisé comme canal de signalisation.
